# EUROPEAN PATENT APPLICATION

(11) **EP 4 383 540 A1**
(43) Date of publication of application: **12.06.2024**
(21) Application number: 23215000.3
(22) Date of filing: 07.12.2023
(51) Int. Cl.: H02M 1/42, H02M 1/32, H02M 1/34, H02H 9/04

(54) **SURGE SUPPRESSION CIRCUIT**

(30) Priority: 09.12.2022 CN 202211576475
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: Wang, Linji, Ningbo, 315103 (CN); Fang, Junqi, Ningbo, 315103 (CN); Dong, Jianguo, Ningbo, 315103 (CN)
(74) Representative: 2K Patentanwälte Blasberg Kewitz & Reichel

(57) **Abstract**

The invention provides a surge suppression circuit, the input end of the surge suppression circuit is connected with a rectifying circuit, the output end of the surge suppression circuit is connected with a load, and the surge suppression circuit comprises a first transient suppression diode, a second transient suppression diode, a third diode, a first capacitor and a second capacitor, the second transient suppression diode and the second capacitor are connected in series; the positive output end of the rectifying circuit is connected with the negative electrode of the first transient voltage suppressor and the second capacitor, and the negative output end of the rectifying circuit is connected with the positive electrode of the second transient voltage suppressor and the first capacitor; the negative electrode of the third diode is connected with the node of the first transient voltage suppressor and the first capacitor, and the positive electrode of the third diode is connected with the node of the second transient voltage suppressor and the second capacitor. According to the invention, the valley filling function and the anti-surge function are integrated, the performance of the power supply is improved, and the miniaturization of the power supply is facilitated.

## Description

### FIELD OF THE TECHNOLOGY

The present invention relates to the technical field of power supply circuits, and in particular to a surge suppression circuit based on a valley filling circuit.

### BACKGROUND

PPFC valley filling circuit is a commonly used circuit to achieve high PF in small power supplies (<25W). The valley filling circuit behind the rectifier bridge is used to greatly increase the conduction angle of the rectifier tube. By filling the valley point, the input current is reduced from the peak pulse to a waveform close to a sine wave, which improves the power factor and significantly reduces the total harmonic distortion. Its advantage is that the circuit is simple, the cost is low, the power factor compensation effect is significant, and the input circuit does not need to use a large volume, heavy weight of the large inductor.

In the existing circuit design, due to the principle of the valley-filling circuit, two capacitors are connected in series when charging, and two capacitors are connected in parallel when discharging. Therefore, when the surge voltage occurs when the capacitor is discharged, it is equivalent to half of the input capacitance of the valley-filling circuit when it is not in use, which leads to its insufficient ability to suppress surges naturally. Therefore, when using the valley filling circuit, it is necessary to match the surge suppression circuit at the same time, and combine with each other to achieve better performance of the power supply.

Therefore, those skilled in the art are committed to developing a surge suppression circuit on the existing PPFC valley-filling circuit, which not only retains the original valley-filling function, but also provides a certain anti-surge capability. This design is beneficial to realize the miniaturization of power supply.

### BRIEF SUMMARY OF THE TECHNOLOGY

In view of the above-mentioned defects of the prior art, the technical problem to be solved by the present invention is the shortcoming of insufficient anti-surge capability of the existing PPFC valley filling circuit.

To achieve the above object, the present invention provides a surge suppression circuit, its input end is connected to a rectifier circuit, its output end is connected to a load, the surge suppression circuit comprises a first transient suppression diode, a second transient suppression diode, a third diode, and a first capacitor, and a second capacitor, wherein the first transient suppression diode and the first capacitor are connected in series, and the second transient suppression diode and the second capacitor are connected in series; a positive output of the rectifier circuit is connected to the negative terminal of the first transient suppression diode and the second capacitor, and the negative output of the rectifier circuit is connected to the positive terminal of the second transient suppression diode and the first capacitor; a negative terminal of the third diode is connected to a junction of the first transient suppression diode and the first capacitor, and the positive terminal of the third diode is connected to a junction of the second transient suppression diode and the second capacitor.

According to a further embodiment, the third diode is connected in series with the first resistor, and one end of the first resistor is connected to the positive terminal of the third diode, and the other end is connected to the negative terminal of the second transient suppression diode.

According to a further embodiment, a series circuit of the second transient suppression diode and the second capacitor is connected in parallel with a third capacitor.

According to a further embodiment, the first capacitor and the second capacitor are electrolytic capacitors, the positive pole of the first capacitor is connected to the positive pole of the first transient suppression diode, and the negative pole of the second capacitor is connected to the negative pole of the second transient suppression diode; the negative pole of the first transient suppression diode and the positive pole of the second capacitor are connected to the positive output of the rectifier circuit, and the positive pole of the second transient suppression diode and the negative pole of the first capacitor are connected to the negative output of the rectifier circuit.

According to a further embodiment, the rectifier circuit is front-connected to an EMC filter module.

According to a further embodiment, a series circuit of the first transient suppression diode and the first capacitor is connected to an absorption module, which comprises a fourth diode, a second resistor , and a fourth capacitor, wherein the fourth diode is connected in series with the second resistor, the fourth capacitor is connected in parallel with the second resistor, the negative pole of the fourth diode is connected to a junction of the fourth capacitor and the second resistor, and the positive pole of the fourth diode is connected to the switching circuit and then grounded.

According to a further embodiment, a circuit protection module is connected in parallel on a series circuit of the second transient suppression diode and the second capacitor, the circuit protection module comprising a voltage-sensitive resistance, a gas discharge tube, a transient suppression diode or any combination of the above.

According to a further embodiment, a power circuit is provided between the surge suppression circuit and the output circuit, the power circuit comprising a transformer.

According to a further embodiment, it provides an LED lamp power supply, which includes a surge suppression circuit as mentioned above.

Technical effect: The surge suppression circuit provided by the present invention integrates the original function of valley filling and anti-surge function, improves the performance of the power supply, and is beneficial to realize the miniaturization of the power supply.

### BRIEF DESCRIPTION OF THE DRAWINGS

The idea, specific structure and technical effects of the present invention will be further described below in conjunction with the accompanying drawings, so as to fully understand the purpose, features and effects of the present invention.
Figure 1 is a schematic circuit diagram of an embodiment of the surge suppression circuit of the present invention.
Figure 2 is a circuit schematic diagram of another embodiment of the surge suppression circuit of the present invention.
Figure 3 is a schematic circuit diagram of a further embodiment of the surge suppression circuit of the present invention.
Figure 4 is a connection diagram of each module of the surge suppression circuit in Figure 3.

### DETAILED DESCRIPTION OF THE INVENTION

The following specific embodiments of the present invention will be described in further detail based on the accompanying drawings. It should be understood that the description of the embodiments of the present invention here is not intended to limit the protection scope of the present invention.

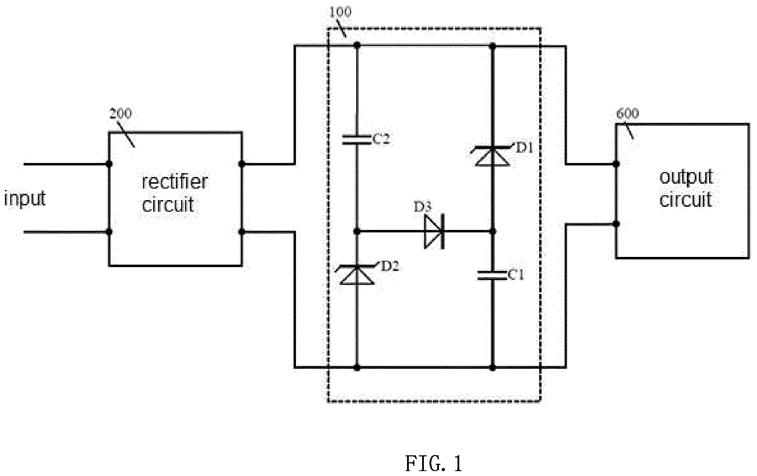

A basic structure of a surge suppression circuit 100 of the present invention is shown in FIG.1, the input end of which is connected to a rectifier circuit 200, and the output end of which is connected to a load via an output circuit 600, wherein a first transient suppression diode D1, a second transient suppression diode D2, a third diode D3, and a first capacitance C1, and a second capacitance C2 are included, wherein a first transient suppression diode D1 is connected in series with the first capacitor C1 are connected in series, and the second transient suppression diode D2 and the second capacitor C2 are connected in series; the positive output terminal of the rectifier circuit 200 is connected to the negative pole of the first transient suppression diode D1 and the second capacitor C2, and the negative output terminal of the rectifier circuit 200 is connected to the positive pole of the second transient suppression diode D2 and the first capacitor C1; the cathode of the third diode D3 is connected to the junction of the first transient suppression diode D1 and the first capacitor C1, and the anode of the third diode D3 is connected to the junction of the second transient suppression diode D2 and the second capacitor C2.

The surge suppression circuit 100 of the present invention uses two transient suppression diodes D1, D2. The characteristic of the TVS diode is that when the two poles of the TVS diode are impacted by a reverse transient high energy, it can change the high impedance between its two poles to a low impedance at a speed of 10 minus 12 seconds, absorb up to several thousand watts of surge power, clamp the voltage between the two poles at a predetermined value, effectively protect the precision components in the electronic circuit from damage by various surge pulses - this is the role of the transient suppression diode reverse; when the transient suppression diode is forward, it still has the characteristics of a diode - forward conduction, and the conduction voltage drop is not high.

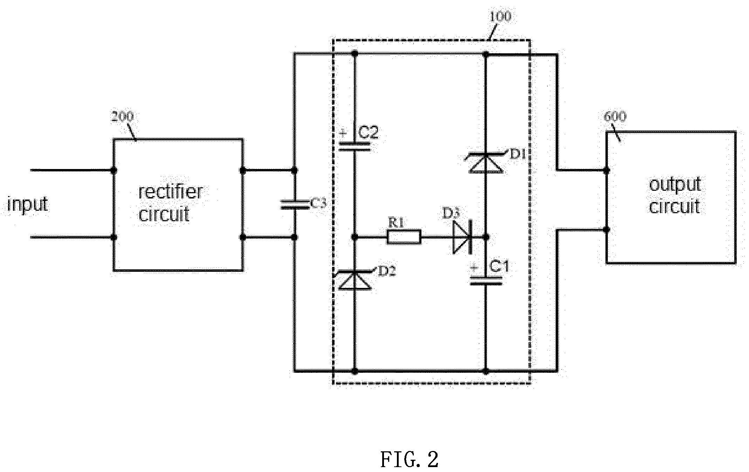

FIG.2 is a schematic diagram of a further embodiment of the surge suppression circuit 100 of the present invention. In this embodiment, the third diode D3 is connected in series with the first resistor R1, and one end of the first resistor R1 is connected to the anode of the third diode D3, and the other end is connected to the cathode of the second transient suppression diode D2. By adjusting the size of the first resistor R1, the power factor of the overall product can be adjusted. It is suitable for applications with high power requirements. For applications with low power requirements, the embodiment as in FIG.1 can be directly selected.

As shown in FIG. 2, the series circuit of the second transient suppression diode D2 and the second capacitor C2 is further connected in parallel with a third capacitor C3. The main function of the third capacitor C3 is to improve the stability of the circuit at the lowest input voltage, so that when the lowest value of the input voltage occurs, the power can still be supplied through the circuit and it can operate normally.

In a specific embodiment of the surge suppression circuit 100 of the present invention, the first capacitor and the second capacitor are electrolytic capacitors, the anode of the first capacitor C1 is connected to the anode of the first transient suppression diode D1, and the anode of the second capacitor C2 is connected to the negative pole of the second transient suppression diode D2; the negative pole of the first transient suppression diode D1 and the positive pole of the second capacitor C2 are connected to the positive output side of the rectifier circuit 200, and the positive pole of the second transient suppression diode D2 and the negative pole of the first capacitor C1 are connected to the negative output side of the rectifier circuit 200 .

The surge suppression circuit 100 of FIG. 2 operates as follows: According to the charging principle of the valley filling circuit, when the input voltage is higher than the voltage across the third capacitor C3, the input voltage charges the first capacitor C1 and the second capacitor C2, at this time the first transient suppression diode D1 and the second transient suppression diode D2 are in the reverse cut-off state, and the second capacitor C2, the first resistor R1, the third diode D3, and the first capacitor C1 are charged in series, and the charging capacitance at this point in time is much less than half of the first capacitor C1 if viewed from the two-port network. When the input voltage is lower than the voltage across the third capacitor C3, the input line does not function, and the first capacitor C1 and the second capacitor C2 discharge the output circuit, which is equivalent to the capacity capacitance of two first capacitors C1 if viewed from the two-port network at the output.

In this application, D1 and D2 are transient suppression diodes. When the input voltage is higher than the voltage across the third capacitor C3, the input voltage is still able to charge the first capacitor C1 and the second capacitor C2 as long as it is ensured that the value of the voltage across the transient suppression diodes D1 and the transient suppression diode D2 is lower than the voltage across the third capacitor C3. When the input voltage is lower than the voltage across the third capacitor C3, the input circuit does not function, and the first capacitor C1 and the second capacitor C2 discharge the output circuit. At this time, according to the forward conduction characteristics of the transient suppression diode, the first transient suppression diode D1 and the second transient suppression diode D2 are in forward conduction, and the first capacitor C1 and the second capacitor C2 discharge the output circuit at the same time, if viewed from the two-port network at the output end of the surge suppression circuit 100, which is equivalent to the capacity of two first capacitors C1 to discharge.

During the working process of the circuit, the basic principle of this valley filling line does not change in any way when the charging process and the discharging process take place during the operation of the circuit, but the voltage during the charging process is somewhat limited due to the first transient suppression diode D1 and the second transient suppression diode D2.

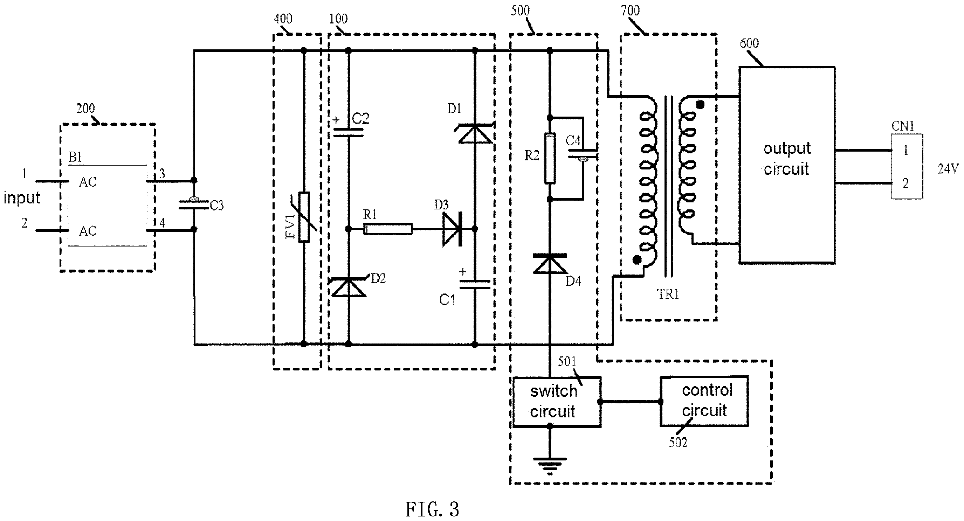

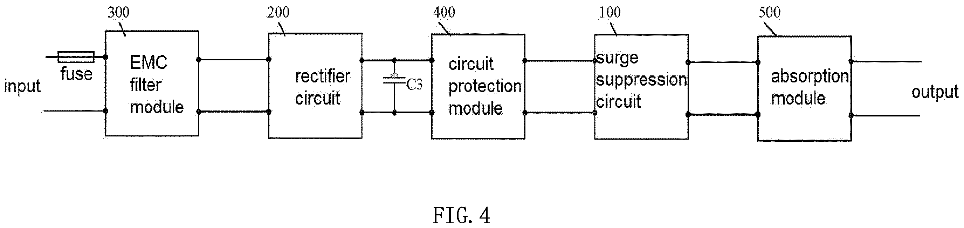

As shown in FIGS. 3 and 4, in a further embodiment of the present invention, the rectifier circuit 200 is pre-connected with an EMC filter module 300. The function of the EMC filter module 300 is to suppress the interference caused by the high-frequency switching of the power supply. The circuit structure of this part can be properly selected by those skilled in the art according to the prior art, and will not be repeated here.

The inductance value in the EMC filter module 300 significantly affect the residual voltage value of the surge voltage, wherein the value of the inductance is taken as not too large as possible to ensure that the residual voltage value can be controlled within the withstand voltage range at both ends of the surge suppression circuit 100. If it is true that the EMC filter module 300 needs to use an inductance with a larger inductance, further, the series circuit of the second transient suppression diode D2 and the second capacitor C2 is connected in parallel with a circuit protection module 400, which is shown in FIG. 3 as a voltage-limiting protector FV1, which is selected from the voltage-sensitive resistor, the gas discharge tube, or the transient suppression diode, and the circuit protection module 400 can also be any combination of voltage-sensitive resistors, gas discharge tubes, or transient suppression diodes.

The surge suppression circuit 100 of the present invention cooperates with the circuit protection module 400 to provide better protection against surges. One of the simplest examples of the voltage limiting protector FV1 is a single voltage-sensitive resistor. The advantage of this solution is that it can share a part of the surge voltage in low-power applications, and at the same time it is sufficient to take into account the cost performance; but if necessary for greater protection, gas discharge tubes can also be used.

The series circuit of the first transient suppression diode D1 and the first capacitor C1 is further connected with an absorption module 500, the absorption module 500 includes a fourth diode D4, a second resistor R2 and a fourth capacitor C4, wherein the fourth diode D4 is connected in series with the second resistor R2, and the fourth capacitor C4 is connected in parallel with the second resistor R2, and the cathode of the fourth diode D4 is connected to a junction of the fourth capacitor C4 and the second resistor R2, and the anode of the fourth diode D4 is connected to the switch circuit 501; the control end of the switch circuit 501 receives a control signal from the control circuit 502, its first end is connected to the anode of the fourth diode D4, and its second end is grounded, and the switch circuit 501 is a circuit including an element having a switching function.

The function of the absorbing module 500 is to prevent sudden changes in the voltage at both ends of the output circuit and absorb the overvoltage in the peak state. The second resistor R2 connected in series plays a damping role, and the energy of the overvoltage is consumed through the second resistor R2, thereby suppressing the oscillation of the circuit.

The settings in the absorbing module 500 can affect the actual withstand voltage value of the switch circuit in normal operation, because when the surge occurs, the voltage finally falling on the switch circuit is small enough to be within the withstand voltage range of the switch circuit. Therefore, by setting the absorption module 500, the voltage loaded on the switching circuit is sufficiently low during normal operation.

Further, a power circuit 700 is provided between the output terminals of the surge suppression circuit 100 and the output circuit 600, and the power circuit 700, as preferred in FIG. 3, is a circuit including a transformer TR1, which mainly realizes the functions of electrical isolation and power conversion, and the output circuit 600 mainly plays the roles of feedback and voltage stabilization, and is ultimately connected to the lamp load.

According to the above embodiments, the present invention also provides an LED lamp power supply, which includes the above surge suppression circuit 100.

The preferred specific embodiments of the present invention have been described in detail above. It should be understood that those skilled in the art can make many modifications and changes according to the concept of the present invention without creative effort. Therefore, all technical solutions that can be obtained by those skilled in the art based on the concept of the present invention through logical analysis, reasoning or limited experiments on the basis of the prior art shall be within the scope of protection defined by the claims.

## Claims

1. A surge suppression circuit, its input end is connected to a rectifier circuit (200), its output end is connected to a load, **characterized in that**:
the surge suppression circuit comprises a first transient suppression diode D1, a second transient suppression diode D2, a third diode D3, and a first capacitor C1, and a second capacitor C2, wherein the first transient suppression diode D1 and the first capacitor C1 are connected in series, and the second transient suppression diode D2 and the second capacitor C2 are connected in series;
a positive output of the rectifier circuit (200) is connected to the negative terminal of the first transient suppression diode D1 and the second capacitor C2, and the negative output of the rectifier circuit (200) is connected to the positive terminal of the second transient suppression diode D2 and the first capacitor C1;
a negative terminal of the third diode D3 is connected to a junction of the first transient suppression diode D1 and the first capacitor C1, and the positive terminal of the third diode D3 is connected to a junction of the second transient suppression diode D2 and the second capacitor C2.

2. The surge suppression circuit as claimed in claim 1, wherein the third diode D3 is connected in series with the first resistor R1, and one end of the first resistor R1 is connected to the positive terminal of the third diode D3, and the other end is connected to the negative terminal of the second transient suppression diode D2.

3. The surge suppression circuit as claimed in claim 1 or 2, wherein a series circuit of the second transient suppression diode D2 and the second capacitor C2 is connected in parallel with a third capacitor C3.

4. The surge suppression circuit as claimed in any one of claims 1-3, wherein
the first capacitor and the second capacitor are electrolytic capacitors, the positive pole of the first capacitor C1 is connected to the positive pole of the first transient suppression diode D1, and the negative pole of the second capacitor C2 is connected to the negative pole of the second transient suppression diode D2;
the negative pole of the first transient suppression diode D1 and the positive pole of the second capacitor C2 are connected to the positive output of the rectifier circuit (200), and the positive pole of the second transient suppression diode D2 and the negative pole of the first capacitor C1 are connected to the negative output of the rectifier circuit (200).

5. The surge suppression circuit as claimed in any one of claims 1-4, wherein the rectifier circuit (200) is front-connected to an EMC filter module (300).

6. The surge suppression circuit as claimed in any one of claims 1-5, wherein a series circuit of the first transient suppression diode D1 and the first capacitor C1 is connected to an absorption module (500), which comprises a fourth diode D4, a second resistor R2, and a fourth capacitor C4, wherein the fourth diode D4 is connected in series with the second resistor R2, the fourth capacitor C4 is connected in parallel with the second resistor R2 , the negative pole of the fourth diode D4 is connected to a junction of the fourth capacitor C4 and the second resistor R2, and the positive pole of the fourth diode D4 is connected to the switching circuit (501) and then grounded.

7. The surge suppression circuit as claimed in any one of claims 1-6, wherein a circuit protection module (400) is connected in parallel on a series circuit of the second transient suppression diode D2 and the second capacitor C2, the circuit protection module (400) comprising a voltage-sensitive resistance, a gas discharge tube, a transient suppression diode or any combination of the above.

8. The surge suppression circuit as claimed in any one of claims 1-7, wherein a power circuit (700) is provided between the surge suppression circuit (100) and the output circuit (600), the power circuit (700) comprising a transformer TR1.

9. An LED lamp power supply, **characterized in that**, it includes a surge suppression circuit as claimed in any one of claims 1-8.
